(19) Europäisches Patentamt
European Patent Office
Office européen des brevets

(11) Veröffentlichungsnummer: **0 019 299**
**B1**

# (12) EUROPÄISCHE PATENTSCHRIFT

(45) Veröffentlichungstag der Patentschrift: **27.07.83**

(51) Int. Cl.³: **G 03 C 1/84**

(21) Anmeldenummer: **80102796.2**

(22) Anmeldetag: **20.05.80**

(54) **Photographisches Silberhalogenidmaterial mit einer Farbstoffilter- oder einer Farbstoff-Antihaloschicht.**

(30) Priorität. **22.05.79 GB 7917692**

(43) Veröffentlichungstag der Anmeldung: **26.11.80 Patentblatt 80/24**

(45) Bekanntmachung des Hinweises auf die Patenterteilung: **27.07.83 Patentblatt 83/30**

(84) Benannte Vertragsstaaten: **BE CH DE FR GB IT LI**

(56) Entgegenhaltungen:
**DE-A-1 597 539**
**DE-A-1 909 463**
**DE-A-2 117 346**
**DE-B-1 597 482**
**GB-A-606 141**
**GB-A-2 002 916**

(73) Patentinhaber: **CIBA-GEIGY AG, Patentabteilung Postfach, CH-4002 Basel (CH)**

(72) Erfinder: **Postle, Stephen Roderick, Springdale 29 Goodwood Avenue, Hutton, Brentwood Essex CM13 1QD (GB)**
Erfinder: **Psaila, Alexander, 12 Swallow Path, Tilekiln, Chelmsford Essex (GB)**

(74) Vertreter: **Berg, Wilhelm, Dr. et al, Dr. Berg, Dipl.-Ing. Stapf, Dipl.-Ing. Schwabe, Dr. Dr. Sandmair Mauerkircherstrasse 45, D-8000 München 80 (DE)**

**EP 0 019 299 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Photographisches Silberhalogenidmaterial mit einer Farbstoffilter- oder einer Farbstoff-antihaloschicht

Die vorliegende Erfindung betrifft ein photographisches Silberhalogenidmaterial, das entweder eine Farbstoffilterschicht oder eine Farbstoff-antihaloschicht enthält.

In Filterschichten oder Antihaloschichten und insbesondere in Antihalounterschichten in photographischem Material verwendete Farbstoffe müssen mit der Schicht, in der sie gegossen sind, substantiv und leicht ausbleichbar sein. Im Fall von Antihaloschichten sollten sie auch die breitestmögliche spektrale Absorption besitzen.

Es wurde nun gefunden, daß eine gewisse Farbstoffklasse als Filter- oder Antihalofarbstoffe sehr geeignet sind, wenn sie in einer Schicht im photographischen Material als feste Dispersion vorliegen.

Gegenstand der vorliegenden Erfindung ist demnach ein photographisches Silberhalogenidmaterial, welches in einer Farbstoffilter- oder Farbstoffantihaloschicht eine feste Dispersion mindestens eines wasserunlöslichen Farbstoffs der allgemeinen Formel

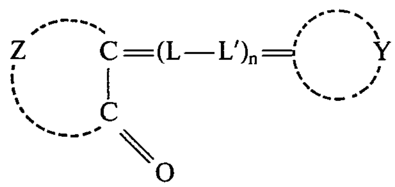

(1)

worin L und L' je eine gegebenenfalls substituierte Methingruppe, n für 0, 1 oder 2, Z die zur Ergänzung zu einem gegebenenfalls substituierten sauren carbocyclischen oder heterocyclischen Ring erforderlichen Atome und Y die zur Ergänzung zu einem gegebenenfalls substituierten basischen carbocyclischen oder heterocyclischen Ring erforderlichen Atome bedeuten, wobei mindestens einer der Ringe Z und Y durch eine $-COOH$-Gruppe oder einen eine $-COOH$-Gruppe enthaltenden Rest substituiert ist, in einem Bindemittel enthält.

Unter einem basischen heterocyclischen oder carbocyclischen Ring versteht man dabei einen elektronenspendenden heterocyclischen oder carbocyclischen Ring. Ein saurer heterocyclischer oder carbocyclischer Ring bedeutet einen elektronenanziehenden heterocyclischen oder carbocyclischen Ring. Diese Begriffe werden in »Special Topics in Heterocyclic Chemistry [Spezielle Themen der heterocyclischen Chemie]«, herausgegeben von A. Weinberger und E. C. Taylor, Verlag John Wiley — Interscience, New York, 1977, erörtert; siehe Kapitel VIII, Synthesis and properties of cyanine and related dyes [Synthese und Eigenschaften von Cyanin- und verwandten Farbstoffen], von D. M. Sturmer, S. 455—460.

Beispiele für basische heterocyclische und carbocyclische Ringe sind Benzimidazol, Benzoxazol, Indol, Lepidin und Chinolin, sowie Benzthiazol und Benzselenazol.

Saure heterocyclische und carbocyclische Ringe sind beispielsweise Barbiturat, Thiobarbiturat, Dimedon und Indan-1,3-dion.

Vorzugsweise stellt im Farbstoff der Formel (1) n 1 oder 2 und sowohl L als auch L' $-CH=$ dar.

Besonders bevorzugt stellt Z die zur Ergänzung zu einem substituierten Hydroxypyridonring oder einem substituierten Pyrazolonring erforderlichen Atome dar.

Gegenstand einer bevorzugten Ausführungsform der Erfindung ist daher photographisches Silberhalogenidmaterial, welches in einer Farbstoffilter- oder Farbstoffantihaloschicht eine feste Dispersion mindestens eines wasserunlöslichen Pyridonfarbstoffs der Formel

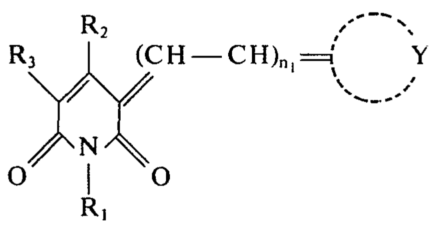

(2)

worin $n_1$ 1 oder 2 ist, Y die oben angegebene Bedeutung hat, $R_1$ ein Wasserstoffatom oder einen gegebenenfalls substituierten Alkyl-, Aralkyl-, Cycloalkyl-, Aryl- oder heterocyclischen Rest oder eine gegebenenfalls substituierte Aminogruppe, $R_2$ ein Wasserstoffatom oder eine Hydroxyl-, Amino-, $-CN$-, $-COOR^1$-, $-CONR^1R^2$- oder $-COR^1$-Gruppe oder einen gegebenenfalls substituierten Alkyl-, Aralkyl-, Cycloalkyl-, Aryl- oder heterocyclischen Rest sowie $R_3$ ein Wasserstoffatom oder eine $-CN$-, $-COOR^3$-, $-CONR^3R^4$-, $-SO_3H$-, $-SO_3^{\ominus}$- oder $-COR^3$-Gruppe bedeuten, wobei $R^1$, $R^2$, $R^3$ und $R^4$ unabhängig voneinander je ein Wasserstoffatom oder ein gegebenenfalls substituierter Alkyl-, Aralkyl-, Cycloalkyl-, Aryl- oder heterocyclischer Rest sind und wobei mindestens eine der

Hydroxypyridon- oder Y-ringe durch eine —COOH-Gruppe oder einen eine —COOH-Gruppe enthaltenden Rest substituiert ist, in einem Bindemittel enthält.

Überall in dieser Erfindung werden die Begriffe Niederalkyl und substituiertes Niederalkyl dazu verwendet, Alkyl mit 1 bis 6 Kohlenstoffatomen zu bezeichnen.

Die gegebenenfalls substituierten Alkylreste, welche durch $R_1$ und $R_2$ sowie $R^1$, $R^2$, $R^3$ und $R^4$ dargestellt werden, sind Alkylreste oder substituierte Alkylreste, und als spezielle Beispiele dafür seien Methyl, Äthyl, n-Propyl, n-Butyl, n-Octyl, n-Decyl und n-Dodecyl, Hydroxyniederalkyl wie $\beta$-(Methoxy- oder Äthoxy)-äthyl und $\gamma$-Methoxypropyl, Cyanmethyl, Carbamoylmethyl, Carbäthoxymethyl und Acetylmethyl genannt. Niederalkylreste und substituierte Niederalkylreste werden bevorzugt.

Als durch $R_1$, $R_2$, $R^1$, $R^2$, $R^3$ und $R^4$ dargestellte Aralkylreste seien beispielsweise Benzyl und $\beta$-Phenyläthyl genannt.

Cyclohexyl sei als Beispiel eines durch $R_1$, $R_2$, $R^1$, $R^2$, $R^3$ und $R^4$ dargestellten Cycloalkylrests genannt. Die durch $R_1$, $R_2$, $R^1$, $R^2$, $R^3$ und $R^4$ dargestellten, gegebenenfalls substituierten Arylreste sind vorzugsweise gegebenenfalls substituierte Phenylreste, und als spezielle Beispiele für solche Reste seien Phenyl, Tolyl, Chlorphenyl, Methoxyphenyl und Äthoxyphenyl genannt. Die durch $R_1$, $R_2$, $R^1$, $R^2$, $R^3$ und $R^4$ dargestellten gegebenenenfalls substituierten heterocyclischen Reste sind vorzugsweise 5- und 6gliedrige heterocyclische Ringe, und als spezielle Beispiele solcher Reste seien 2-Pyridyl, 2-Thiazolyl, 1-Piperidinyl und 1-Morpholinyl genannt, die jeweils gegebenenfalls substituiert sind.

Gegenstand einer besonderen Ausführungsform der Erfindung ist photographisches Silberhalogenidmaterial, welches in einer Farbstoffilter- oder Farbstoffantihaloschicht eine feste Dispersion mindestens eines wasserunlöslichen Pyrazolonfarbstoffs der Formel

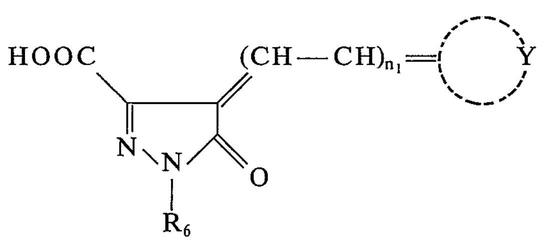

(3)

worin $n_1$ und Y die oben angegebenen Bedeutungen haben und $R_6$ ein Wasserstoffatom oder eine gegebenenfalls substituierte Alkyl- oder Arylgruppe, vorzugsweise Alkyl mit 1 bis 4 Kohlenstoffatomen oder Phenyl, darstellt, enthält.

Gegenstand einer weiteren Ausführungsform der Erfindung ist photographisches Silberhalogenidmaterial, welches in einer Farbstoffilter- oder Farbstoffantihaloschicht eine feste Dispersion mindestens eines wasserunlöslichen Farbstoffs der Formel

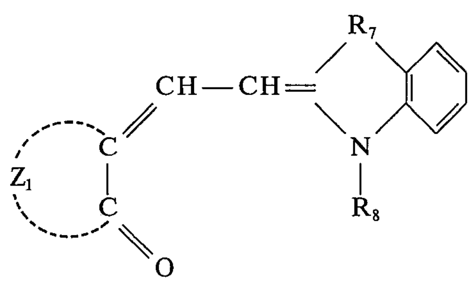

(4)

worin Z entweder ein wie unter Formel (2) definierter Hydroxypyridonring oder ein wie unter Formel (3) definierter Pyrazolonring ist, $R_7$ entweder $-O-$, $-S-$, $-Se-$, $-CR_9R_{10}-$, wobei $R_9$ und $R_{10}$ je Wasserstoff oder Niederalkylgruppen sind, oder $-NR_{11}-$, wobei $R_{11}$ Wasserstoff oder eine Niederalkylgruppe ist, und $R_8$ ein Wasserstoffatom, eine Niederalkylgruppe oder eine —COOH-Gruppe darstellt, in einem Bindemittel enthält. Vorzugsweise stellt $R_7$ $-O-$, $-CR_9R_{10}-$ oder $-NR_{11}-$ dar, wobei $R_{11}$, $R_8$, $R_9$ und $R_{10}$ sämtlich jeweils Wasserstoff, Methyl oder Äthyl bedeuten.

Farbstoffe der Formel (1) werden durch das Sulfit in photographischen Verarbeitungslösungen, insbesondere in photographischen Silberhalogenidentwicklerlösungen, leicht ausgebleicht.

Beispiele für die am leichtesten ausbleichbaren Farbstoffe der Formel (1) sind die weiter unten beschriebenen Farbstoffe 1 und 4.

Die Farbstoffe der Formel (1) sind teilweise in der Patentliteratur, z. B. in GB-A-606 141 und GB-A-654 683, als optisch sensibilisierende Merocyaninfarbstoffe beschrieben. Aus der GB-A-606 141 ist es ferner bekannt, diese Merocyaninfarbstoffe zur Herstellung von optischen Filtern für photographische Zwecke zu verwenden. Als solche haben sie jedoch keine breitere Anwendung gefunden. Gemäß der DE-A-1 597 539 können Farbstoffe enthaltende Flüssig/flüssig-Dispersionen zur

Herstellung von Lichthofschutzschichten verwendet werden.

Ein wesentliches Merkmal des erfindungsgemäßen photographischen Materials besteht darin, daß die Farbstoffe der Formel (1) als feste Dispersion im photographischen Material vorliegen sollen. Versuche, die Farbstoffe auf andere Weise, zum Beispiel durch Gießen von Lösungen in Lösungsmitteln, in gegossene Schichten einzuarbeiten, haben wegen der sehr geringen Löslichkeit dieser Farbstoffe in polaren Lösungsmitteln wie Methanol, Äthanol, Aceton, Äthylacetat, Dichlormethan und Ölen wie Trikresylphosphat nicht zum Erfolg geführt. Derartige Güsse weisen eine niedrige Dichte auf und decken einen erheblich engeren Spektralbereich. Wegen der unkontrollierten Ausfällung des Farbstoffs in der Schicht ist auch die Qualität dieser Güsse stets schlecht. Die Gegenwart von Öl erhöht die Dicke der Schicht und vermindert die Ausbleichbarkeit des Farbstoffs.

Wenn ferner die Farbstoffe der Formel (1) in gegossenen Schichten als feste Dispersionen vorliegen, weisen sie einen größeren Bereich geeigneter spektraler Absorptionen auf, als wenn sie auf andere Weise gegossen sind.

Als Bindemittel für die Farbstoffe der Formel (1) wird Gelatine bevorzugt, insbesondere wenn die die Farbstoffe enthaltende Schicht eine Filterschicht oder Antihalounterschicht ist.

Eine feste Dispersion der Farbstoffe der Formel (1) läßt sich dadurch herstellen, daß man die Farbstoffe in situ in einem Gelatinemedium bildet und dabei die Ausfällung des Farbstoffs bei seiner Bildung sorgfältig reguliert. Das den festen Farbstoff enthaltende Gelatinemedium kann dann als Schicht im photographischen Material gegossen werden.

Ebenfalls kann man eine feste Dispersion des Farbstoffs in einem Bindemittel nach einer Mahlmethode bilden, wobei eine wäßrige Aufschlämmung des Farbstoffs zusammen mit einem nicht-ionogenen und/oder einem anionen-aktiven Netzmittel sowie Wasser in eine mit Mahlkörpern von 0,7 bis 1,00 mm Durchmesser beschickte Kolloidmühle gegeben wird. Man läßt die Mühle laufen, bis die durchschnittliche Teilchengröße des Farbstoffs einem Durchmesser von weniger als 1 µm entspricht, was sich auf eine mittlere Größe von 0,4 bis 0,5 µm beläuft.

Eine Lösung des Bindemittelmediums (üblicherweise Gelatine in Wasser) wird dann zusammen mit einem Netzmittel der wäßrigen Farbstoffdispersion nach Entnahme aus der Mühle zugesetzt. Danach läßt sich die erforderliche Konzentration der Dispersion mit Bezug auf sowohl die Farbstoffkonzentration als auch die Bindemittelkonzentration einstellen.

Die Formulierung der Farbstoffe der Formel (1) als feste Dispersionen ermöglicht es, neutrale Farbunterschichten, welche praktisch den gesamten aktinischen Lichtbereich überdecken, unter Verwendung von nur ein oder zwei Farbstoffen herzustellen. Farbstoffe der Formel (1) als feste Dispersion lassen sich ohne jegliche Destabilisierung der Dispersion bzw. Beeinträchtigung der Ausbleichbarkeit oder Substantivität der Farbstoffe miteinander mischen.

Die Verbindungen der Formel (1) mit n = 1 oder 2 lassen sich dadurch herstellen, daß man eine Verbindung der Formel (5)

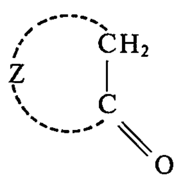

(5)

worin Z die oben angegebene Bedeutung hat, in einem Lösungsmittelmedium bei erhöhter Temperatur mit einer Verbindung der Formel

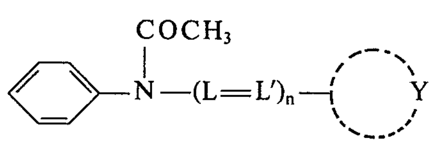

(6)

worin Y, L, L' und n die oben angegebenen Bedeutungen haben, umsetzt.

Als Lösungsmittel eignen sich beispielsweise Äthanol, Essigsäure, Pyridin und Triäthylamin.

Die Verbindungen der Formel (1) mit n = null lassen sich dadurch herstellen, daß man eine Verbindung der Formel (5) in einem Lösungsmittelmedium bei erhöhter Temperatur mit einer Verbindung der Formel

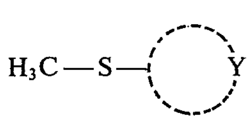

(7)

worin Y die oben dafür angegebene Bedeutung hat, umsetzt.

Die Pyridone der Formel (5) selbst sind nach verschiedenen Methoden erhältlich, wie sie zum

Beispiel in »Heterocyclic Compounds — Pyridine and its derivatives — Part 3 [Heterocyclische Verbindungen — Pyridin und seine Derivate — Teil 3]«, herausgegeben von Klinsberg, Verlag Interscience Publishers, 1962, beschrieben sind. Siehe auch britische Patentschrift Nr. 1 256 095.

Als spezielle Beispiele für Hydroxypyridone seien genannt: 2,6-Dihydroxy-3-cyan-4-methylpyridin, 1-(Methyl oder Äthyl)-3-cyan-4-methyl-6-hydroxypyridon-2, 1-(β-Hydroxyäthyl oder γ-Methoxypropyl)-3-cyan-4-(methyl, phenyl oder äthyl)-6-hydroxypyridon-2, 1-(Phenyl oder Anisyl)-3-cyan-4-(methyl oder phenyl)-6-hydroxypyridon-2, 1-Phenyl-3-(carbonamido oder carbäthoxy)-4-(methyl oder phenyl)-6-hydroxypyridon-2, 2,6-Dihydroxy-3-(carbäthoxy oder carbodiäthylamido)-4-methylpyridin, 2,6-Dihydroxy-3-(carbonamido oder carbäthoxy)-pyridin, 2,6-Dihydroxy-2-carbonamido-4-phenylpyridin, 2,6-Dihydroxy-3-cyan-4-carbonamidopyridin, 2,6-Dihydroxy-3-cyan-4-(carbomethoxy oder carbäthoxy)-pyridin, Äthyl-2,6-dihydroxy-3-cyanpyridyl-(4)-acetat, 2,6-Dihydroxy-3-cyanpyridyl-(4)-acetamid, 2,6-Dihydroxy-3,4-di-(carbäthoxy)-pyridin, 2,6-Dihydroxy-3-carbonamido-4-carbäthoxypyridin, Äthyl-2,6-dihydroxy-isonicotinat, 2,6-Dihydroxy-isonicotinamid, 2,6-Dihydroxy-isonicotinsäurediäthylamid und 2,6-Dihydroxy-3-cyan-4-äthoxycarbonyl-1-methylpyridin.

Die nachfolgenden Herstellungsvorschriften erläutern die Herstellung von Farbstoffen der Formel (1).

## Herstellungsvorschrift 1

Farbstoff der Formel

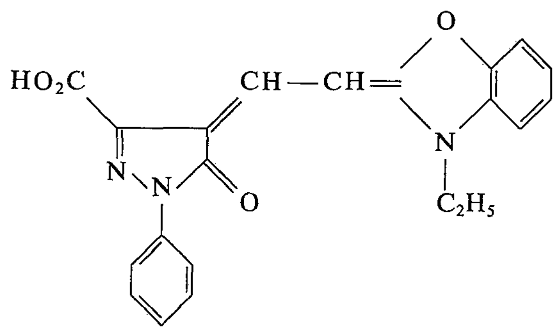

(101)

Man erhitzt 3-Carboxy-1-phenylpyrazolon (8,16 g) und 2-(2'-Acetanilidovinyl)-1-äthylbenzoxazol-jodid (17,36 g) in Essigsäure (40 ml) 10 Minuten zum Rückfluß. Nach Abkühlung wird die Lösung in Wasser gegossen und der ausgefallene Farbstoff mit heißem Wasser und danach mit einem 4 : 1-Gemisch aus Äther und Aceton gewaschen. Der Farbstoff wird durch Soxhletextraktion mit Aceton weiter gereinigt, wobei man 3 g reinen Farbstoff erhält. λ max ($CH_3OH$) = 479 nm.

## Herstellungsvorschrift 2

Farbstoff der Formel

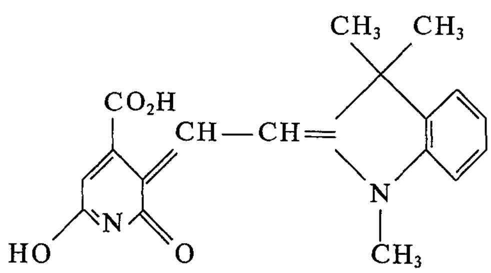

(102)

Man erhitzt Citrazinsäure (3,88 g) und 2-(2'-Acetanilidovinyl)-1,3,3-trimethylindoliniumjodid (11,12 g) in Äthanol (20 ml) mit Triäthylamin (5 ml) 30 Minuten zum Rückfluß. Nach Abkühlung säuert man mit Salzsäure (4,2 ml) an und fällt den Farbstoff durch Eingießen in Äther aus, was ein rotes Harz ergibt. Umfällen aus Methanol in Äther/Aceton 1 : 1 ergibt einen Feststoff, der mit Aceton ausgekocht, filtriert, mit Aceton gewaschen und getrocknet wird, wobei man 6,43 g reinen Farbstoff erhält. λ max ($CH_3OH$) = 506,485 (Schulter).

Herstellungsvorschrift 3

Farbstoff der Formel

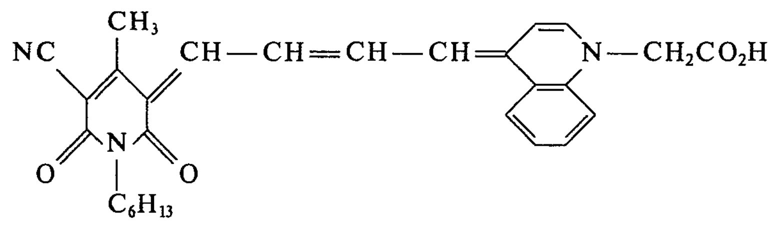

(103)

Man erhitzt 1-Carboxymethyllepidiniumchlorid (2,38 g) und 3-(3'-Acetanilidopropenyliden)-5-cyan-1-n-hexyl-4-methylpyridin-2,6-dion in Pyridin (9 ml) und Triäthylamin (1 ml) 10 Minuten zum Rückfluß. Nach Abkühlung gießt man in Wasser und behandelt das ausgefallene schwarze Öl mit 10%iger Salzsäure (110 ml), was einen Feststoff ergibt. Diesen wäscht man mit Wasser bis zum farblosen Ablauf und kocht dann zunächst mit 10%iger Salzsäure (55 ml) und danach mit Wasser (3 x 50 ml) auf, wobei man 1,77 g reinen Farbstoff erhält. $\lambda$ max ($CH_3OH$) = 599 nm.

Herstellungsvorschrift 4

Farbstoff der Formel

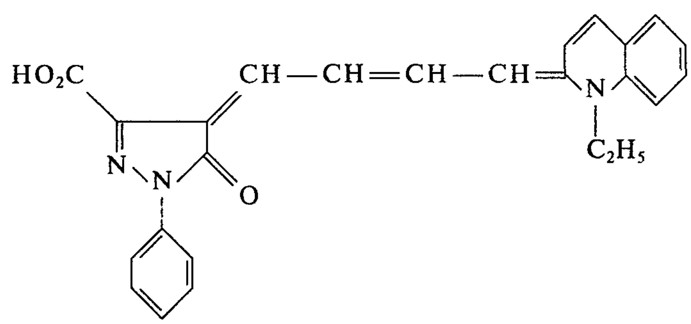

(104)

Man erhitzt 3-Carboxy-1-phenylpyrazolon (2,04 g) und 2-(4'-Acetanilidobutadienyl)-1-äthylchinoliniumjodid (4,7 g) in Äthanol (10 ml) mit Pyridin (5 ml) und Triäthylamin (2 ml) 30 Minuten zum Rückfluß. Nach Abkühlen wird die Lösung in Äther gegossen, was ein blaues Harz liefert, welches man in Methanol aufnimmt und bei 0°C mit Salzsäure (2 ml) ansäuert. Beim Eingießen dieser Lösung in Wasser erhält man einen braunen Feststoff (dessen Farbe beim Auflösen in Triäthylamin nach blau umschlägt). Dieser wird mit Wasser (50 ml) aufgekocht, wobei man den reinen Farbstoff als purpurnen Feststoff (2,44 g) erhält. $\lambda$ max ($CH_3OH$) = 605,520 nm.

Herstellungsvorschrift 5

Farbstoff der Formel

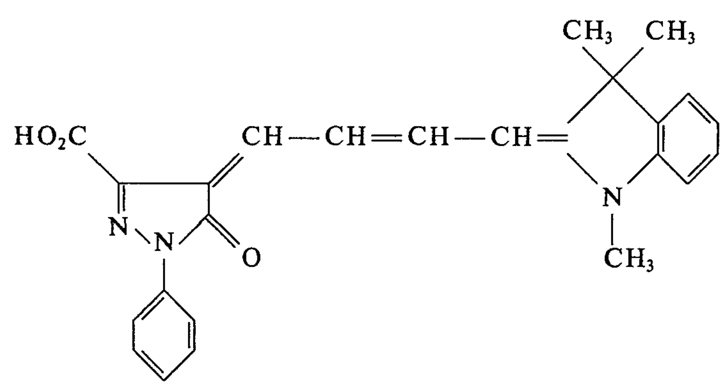

(105)

Man verfährt wie in Herstellungsvorschrift 4, jedoch unter Verwendung von 2-(4'-Acetanilidobutadienyl)-1,3,3-trimethylindoliniumjodid (4,72 g). Der Farbstoff wird als orangefarbener Feststoff (2,8 g) erhalten. $\lambda$ max ($CH_3OH$) = 538, 466, 418 nm.

## Beispiel

Unter Verwendung von 1,0 g einer 10%igen Lösung eines nicht-ionogenen Netzmittels (Octylphenol/10 Mol Äthylenoxyd) und 1,0 g einer 10%igen Lösung eines anionen-aktiven Netzmittels (Natriumsalz des sulfonierten Addukts aus Octyl-methylphenol und 8 Mol Äthylenoxyd) bereitet man aus 10 g des Farbstoffs der Formel (101) eine wäßrige Aufschlämmung. Die in der Aufschlämmung vorliegende Gesamtmenge Wasser beträgt 80 g. Man gießt die Aufschlämmung in eine mit Mahlkörpern von 0,75 bis 1,00 mm beschickte Kolloidmühle. Die Aufschlämmung wird eine Stunde bei 3000 U.p.m. gemahlen, wonach sie eine Teilchengrößenverteilung von weniger als 1 µm Durchmesser besitzt.

Die wäßrige Dispersion des Farbstoffs wird aus der Mühle entnommen und mit 2,5 kg 4%iger wäßriger Gelatinelösung von pH 6,0 versetzt. Als Gelatine wird eine entkationisierte Sorte verwendet. Die Gelatinelösung gibt man langsam unter Rühren zur wäßrigen Dispersion des Farbstoffs. Deren Konzentration wird so eingestellt, daß sich beim Gießen der wäßrigen Gelatine/Farbstoffdispersion als Schicht in panchromatisch sensibilisiertem Silberhalogenidemulsionsmaterial eine Dichte von 1,0 bei $\lambda$ max ergibt, wenn man zu einem Gießgewicht von 20 mg/dm$^2$ Gelatine gießt, was einen Guß von 1—2 mg/dm$^2$ Farbstoff darstellt.

Diese Farbstoffdispersion in wäßriger Gelatinelösung wird auf 150 Mikron dicken, klaren Cellulosetriacetatträger zu einem Gießgewicht von 20 mg/dm$^2$ gegossen. Dieser Guß wird getrocknet und darüber eine panchromatisch sensibilisierte Silberjodobromidemulsion mit einem Gießgewicht von 50 mg/dm$^2$ Silber und 80 mg/dm$^2$ Gelatine gegossen. Diese Schicht wird getrocknet und darüber eine 8 cm$^3$ 6%ige Formaldehydhärtelösung auf 100 g Gelatine enthaltende Gelatinelösung gegossen, um eine Schutz- oder Deckschicht mit einem Gießgewicht von 12 mg/dm$^2$ Gelatine zu schaffen. Die gefärbte Gelatineschicht stellt somit eine Antihalounterschicht dar.

Bei diesen Gießvorgängen ist keine Auslaugung der gefärbten Unterschicht festzustellen.

Ähnliches photographisches Material wird hergestellt, jedoch in Abwesenheit von Farbstoff in der Gelatineunterschicht. Dieses Material wird zur Vergleichsprüfung eingesetzt.

Streifen aus beiden Sätzen photographischen Materials werden hinter einem Keil bildweise belichtet und wie folgt verarbeitet:

Silberhalogenidentwicklerlösung
6 1/2 Minuten bei 20° C

Lösung:

| | |
|---|---|
| p-N-Methylaminophenolsulfat | 2 g |
| Wasserfreies Natriumsulfit | 100 g |
| Hydrochinon | 5 g |
| Borax | 2 g |
| Wasser auf | 1 Liter |

Wässerungsbad
1/2 Minute bei 20° C

Silberhalogenidfixierbad
10 Minuten bei 20° C

Lösung:

| | |
|---|---|
| Natriumthiosulfat | 300 g |
| Wasserfreies Natriumsulfit | 15 g |
| Eisessig | 10 g |
| Borsäure | 7,5 g |
| Kalialaun | 15 g |
| Wasser auf | 1 Liter |

Schlußwässerungsbad
15 Minuten bei 20° C.

Nach Beendigung der Verarbeitung waren keine Anzeichen von Farbstoff in der Antihalounterschicht sichtbar. Der Farbstoff wurde völlig und irreversibel in der Silberhalogenidentwicklerlösung

zerstört, und es war keine Verfärbung irgendeiner der Verarbeitungslösungen sichtbar.

Die sensitometrischen Eigenschaften der beiden Sätze photographischer Streifen werden verglichen, und die Empfindlichkeit, der Kontrast und $D_{max}$ der Streifensätze erweisen sich als ähnlich. Jedoch ist ein deutlicher Anstieg der Schärfe des fertigen Bilds bei den Streifen festzustellen, die vor der Verarbeitung die eine feste Dispersion des Farbstoffs der Formel (101) enthaltende Antihalounterschicht aufwiesen.

Es werden vier ähnliche Streifensätze hergestellt, die jeweils Farbstoffe der Formeln (102) bis (105) in der Antihalounterschicht enthalten. Diese vier Streifensätze werden ebenfalls gleichzeitig mit Streifen ohne Antihalounterschicht untersucht, die jedoch sonst in jeder Hinsicht ähnlich sind. Bei allen vier Streifensätzen wird der Farbstoff in der Antihalounterschicht völlig und irreversibel ausgebleicht. Für alle vier Streifensätze werden die sensitometrischen Eigenschaften nach der Verarbeitung beurteilt, und sie sind alle ähnlich und auch ähnlich dem Material ohne Antihalounterschicht. Die Abbildung ist jedoch in allen vier Streifensätzen deutlich schärfer als in dem Material ohne gefärbte Antihalounterschicht.

Um darzulegen, daß alle fünf Farbstoffe der Formeln (101) bis (105) völlig substantiv mit der Gelatineunterschicht sind, stellt man wie eben beschrieben Gelatinedispersionen der fünf Farbstoffe her und gießt diese als Schichten auf klaren Cellulosetriacetatträger, wiederum mit einem Gelatinegießgewicht von 20 mg/dm² und mit einem Farbstoffgießgewicht von 1—2 mg/dm². Bei diesem Versuch wird kein Härter zugesetzt. Man mißt jeweils die spektrale Absorption dieser Streifen. Alle fünf Streifen werden 30 Minuten bei 25°C in getrennte Wasserbäder eingetaucht. Nach Ablauf dieser Zeit werden sie herausgenommen und getrocknet. In keinem der fünf Bäder beobachtet man eine Färbung des Wassers. Danach wird die spektrale Absorption der Streifen jeweils erneut gemessen, und es zeigt sich, daß diese in jedem Fall unverändert ist.

Um die Verbesserung der spektralen Absorption aufzuzeigen, werden die Spektren des photographischen Materials, das eine feste Dispersion des Farbstoffs der Formel (101) enthält, und eines Materials, welches denselben Farbstoff in Lösung enthält, verglichen. Wird der Farbstoff der Formel (101) in Aceton gelöst, so zeigt das Material eine enge spektrale Absorption zwischen etwa 425 und 500 nm. Wird jedoch der Farbstoff der Formel (101) in der Antihaloschicht als feste Dispersion formuliert, so weist das Material eine sehr breite spektrale Absorptionsbande von 350 bis etwa 550 nm auf (Fig. 1).

Die feste Dispersionsformulierung wird wie eben beschrieben in einem photographischen Material als Antihalounterschicht gegossen. Ähnliches photographisches Material wird hergestellt, aber mit dem Unterschied, daß in der Gelatineunterschicht kein Farbstoff vorliegt. Dieses Material wird zu einer Vergleichsprüfung eingesetzt.

Die sensitometrischen Eigenschaften der beiden verarbeiteten Streifen sind ähnlich, doch ist die Schärfe des Materials, in dem der Farbstoff der Formel (101) als feste Dispersion in der Antihaloschicht formuliert war, deutlich überlegen.

Bei Verwendung der Farbstoffe der Formeln (102 bis 105) erhält man vergleichbare Ergebnisse.

**Patentansprüche**

1. Photographisches Silberhalogenidmaterial, dadurch gekennzeichnet, daß es in einer Farbstoffilter- oder Farbstoffantihaloschicht eine feste Dispersion mindestens eines wasserunlöslichen Farbstoffs der allgemeinen Formel

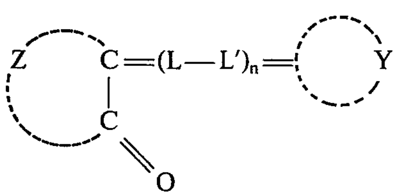

(1)

worin L und L' je eine gegebenenfalls substituierte Methingruppe, n 0, 1 oder 2, Z die zur Ergänzung zu einem gegebenenfalls substituierten sauren carbocyclischen oder heterocyclischen Ring erforderlichen Atome und Y die zur Ergänzung zu einem gegebenenfalls substituierten basischen carbocyclischen oder heterocyclischen Ring erforderlichen Atome bedeuten, wobei mindestens einer der Ringe Z und Y durch eine —COOH-Gruppe oder einen eine —COOH-Gruppe enthaltenden Rest substituiert ist, in einem Bindemittel enthält.

2. Photographisches Silberhalogenidmaterial nach Anspruch 1, dadurch gekennzeichnet, daß der Farbstoff als basischen heterocyclischen oder carbocyclischen Ring einen Benzimidazol-, Benzoxazol-, Benzthiazol-, Benzselenazol-, Indol-, Lepidin- oder Chinolinring enthält.

3. Photographisches Silberhalogenidmaterial nach Anspruch 1 oder 2, dadurch gekennzeichnet, daß der Farbstoff als sauren heterocylischen oder carbocyclischen Ring einen Pyrazolon-, Hydroxypyridon-, Barbiturat-, Thiobarbiturat-, Dimedon- oder Indan-1,3-dionring enthielt.

4. Photographisches Silberhalogenidmaterial nach einem der Ansprüche 1 bis 3, dadurch gekennzeichnet, daß im Farbstoff der Formel (1) n 1 oder 2 und sowohl L als auch L′ —CH= bedeuten.

5. Photographisches Silberhalogenidmaterial nach Anspruch 1, dadurch gekennzeichnet, daß der wasserunlösliche Farbstoff der Formel

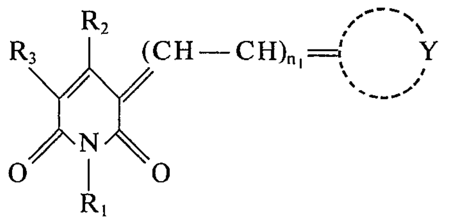

(2)

entspricht, worin $n_1$ 1 oder 2 ist und Y die in Anspruch 1 angegebene Bedeutung hat, $R_1$ ein Wasserstoffatom oder einen gegebenenfalls substituierten Alkyl-, Aralkyl-, Cycloalkyl-, Aryl- oder heterocyclischen Rest oder eine gegebenenfalls substituierte Aminogruppe, $R_2$ ein Wasserstoffatom oder eine Hydroxyl-, Amino-, —CN-, $-COOR^1$-, $-CONR^1R^2$- oder $-COR^1$-Gruppe oder einen gegebenenfalls substituierten Alkyl-, Aralkyl-, Cycloalkyl-, Aryl- oder heterocyclischen Rest sowie $R_3$ ein Wasserstoffatom oder eine —CN-, $-COOR^3$-, $-CONR^3R^4$-, $-SO_3H$-, $-SO_3^{\ominus}$- oder $-COR^3$-Gruppe bedeuten, wobei $R^1$, $R^2$, $R^3$ und $R^4$ unabhängig voneinander je ein Wasserstoffatom oder einen gegebenenfalls substituierten Alkyl-, Aralkyl-, Cycloalkyl-, Aryl- oder heterocyclischen Rest bedeuten und wobei mindestens einer der Hydroxypyridon- odeı Y-ringe durch eine —COOH-Gruppe oder einen eine —COOH-Gruppe enthaltenden Rest substituiert ist.

6. Photographisches Silberhalogenidmaterial nach Anspruch 1, dadurch gekennzeichnet, daß der wasserunlösliche Farbstoff der Formel

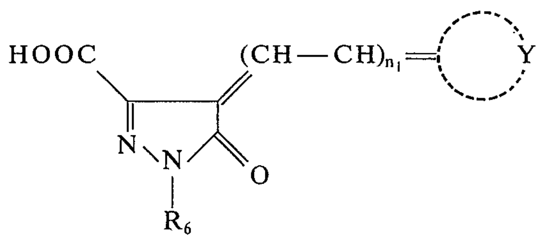

(3)

entspricht, worin $n_1$ 1 oder 2 ist und Y die in Anspruch 1 angegebene Bedeutung hat sowie $R_6$ ein Wasserstoffatom oder eine gegebenenfalls substituierte Alkyl- oder Arylgruppe darstellt.

7. Photographisches Silberhalogenidmaterial nach den Ansprüchen 5 oder 6, dadurch gekennzeichnet, daß in den Farbstoffen der Formeln (2) und (3) n 1 und Y ein Ringsystem der Formel

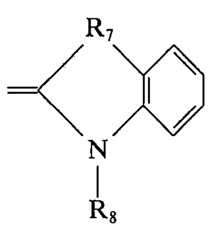

ist, worin $R_7$ entweder —O—, —S—, —Se— oder $CR_9R_{10}$, wobei $R_9$ und $R_{10}$ je Wasserstoff oder Niederalkylgruppen sind, oder $-NR_{11}-$, wobei $R_{11}$ Wasserstoff oder eine Niederalkylgruppe ist, und $R_8$ ein Wasserstoffatom, eine Niederalkylgruppe oder eine —COOH-Gruppe darstellt.

8. Photographisches Silberhalogenidmaterial nach Anspruch 7, dadurch gekennzeichnet, daß in den Farbstoffen der Formeln (2) und (3) $R_7$ —O—, $-CR_9R_{10}-$ oder $-NR_{11}$ ist, wobei $R_{11}$, $R_8$ sowie $R_9$ und $R_{10}$ sämtlich jeweils Wasserstoff, Methyl oder Äthyl bedeuten.

9. Photographisches Silberhalogenidmaterial nach einem der Ansprüche 1 bis 8, dadurch gekennzeichnet, daß als Bindemittel Gelatine vorliegt.

10. Photographisches Silberhalogenidmaterial nach einem der Ansprüche 1 bis 9, dadurch gekennzeichnet, daß die Schicht, welche die feste Dispersion des Farbstoffs enthält, eine Antihalounterschicht ist.

**Claims**

1. Photographic silver halide material which comprises in one dyestuff filter or dyestuff antihalation layer a solid dispersion of at least one water-insoluble dye of the general formula

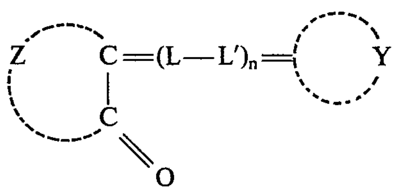

(1)

wherein L and L' each represent an optionally substituted methine group, n is 0, 1 or 2, Z represents the atoms necessary to complete an optionally substituted acidic carbocyclic or heterocyclic ring, Y represents the atoms necessary to complete an optionally substituted basic carbocyclic or heterocyclic ring, at least one of the rings Z and Y being substituted by a $-COOH$ group or being substituted by a group which comprises a $-COOH$ group, in a binder.

2. Photographic silver halide material according to claim 1, wherein the dye contains as basic heterocyclic or carbocyclic ring a benzimidazole, benzoxazole, benzthiazole, benzselenazole, indole, lepidinole or quinoline ring.

3. Photographic silver halide material according to either claim 1 or claim 2, wherein the dye contains as acidic heterocyclic or carbocyclic ring a pyrazolone, hydroxypyridone, barbiturate, thiobarbiturate, dimedone or indan-1,3-dione ring.

4. Photographic silver halide material according to any one of claims 1 to 3, wherein in the dye of formula (1) n is 1 or 2 and both L and L' are $-CH=$.

5. Photographic silver halide material according to claim 1, wherein the water-insoluble dye is of the formula

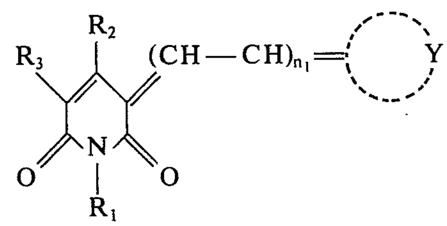

(2)

where $n_1$ is 1 or 2 and Y has the meaning assigned to it in claim 1, $R_1$ represents a hydrogen atom or an optionally substituted alkyl, aralkyl, cycloalkyl, aryl or heterocyclic radical or an optionally substituted amino group, $R_2$ represents a hydrogen atom or a hydroxy, amino, $-CN$, $-COOR^1$, $-CONR^1R^2$ or $-COR^1$ group or an optionally substituted alkyl, aralkyl, cycloalkyl, aryl or heterocyclic radical, and $R_3$ represents a hydrogen atom or a $-CN$, $-COOR^3$, $-CONR^3R^4$, $-SO_3H$, $-SO_3^{\ominus}$ or $-COR^3$ group, where $R^1$, $R^2$, $R^3$ and $R^4$ each independently represent a hydrogen atom or an optionally substituted alkyl, aralkyl, cycloalkyl, aryl or heterocyclic radical and at least one of the hydroxypyridone or Y rings being substituted by a $-COOH$ group or being substituted by a group which comprises a $-COOH$ group.

6. Photographic silver halide material according to claim 1 wherein the water-insoluble dye is of the formula

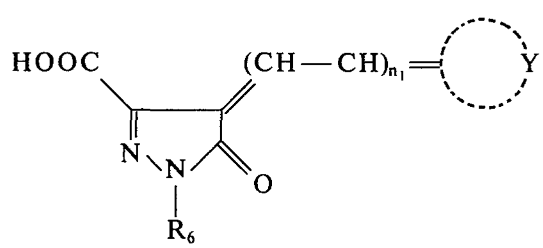

(3)

where $n_1$ is 1 or 2 and Y has the meaning assigned to it in claim 1 and $R_6$ is a hydrogen atom or an optionally substituted alkyl or aryl group.

7. Photographic silver halide material according to either claim 5 or claim 6, wherein in the dyes of formulae (2) and (3) n is 1 and Y is a ring system of the formula

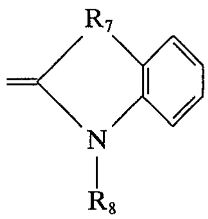

wherein $R_7$ is either $-O-$, $-S-$, $-Se-$ or $CR_9R_{10}$ where $R_9$ and $R_{10}$ are each hydrogen atoms or lower alkyl groups, or $-NR_{11}-$ where $R_{11}$ is a hydrogen atom or a lower alkyl group and $R_8$ is a hydrogen atom, a lower alkyl group or a $-COOH$ group.

8. Photographic silver halide material according to claim 7, wherein in the dyes of formulae (2) and (3) $R_7$ is $-O-$, $-CR_9R_{10}-$ or $-NR_{11}$, wherein $R_{11}$, $R_8$, $R_9$ and $R_{10}$ are each hydrogen, methyl or ethyl.

9. Photographic silver halide material according to any one of claims 1 to 8, wherein the binder is gelatin.

10. Photographic silver halide material according to any one of claims 1 to 9, wherein the layer which comprises the solid dispersion of the dye is an anti-halation underlayer.

**Revendications**

1. Matière photographique à base d'halogénure d'argent, caractérisée par le fait qu'elle contient dans un liant, dans une couche filtrante colorée ou une couche antihalo colorée, une dispersion solide d'au moins un colorant insoluble dans l'eau de formule générale

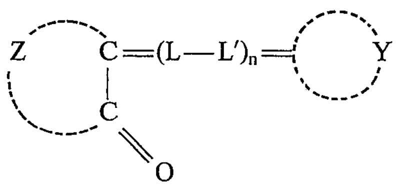

(1)

où L et L' représentent chacun un groupe méthine éventuellement substitué; n représente 0, 1 ou 2; Z représente les atomes nécessaires pour compléter un noyau carbocyclique ou hétérocyclique acide éventuellement substitué, et Y représente les atomes nécessaires pour compléter un noyau carbocyclique ou hétérocyclique basique éventuellement substitué, au moins un des noyaux Z et Y étant substitué par un groupe $-COOH$ ou un reste contenant un groupe $-COOH$.

2. Matière photographique à base d'halogénure d'argent selon la revendication 1, caractérisée par le fait que le colorant contient, comme noyau carbocyclique ou hétérocyclique basique, un noyau de benzimidazole, benzoxazole, benzothiazole, benzosélénazole, indole, lépidine ou quinoléine.

3. Matière photographique à base d'halogénure d'argent selon les revendications 1 ou 2, caractérisée par le fait que le colorant contient, comme noyau carboxyxlique ou hétérocyclique acide, un noyau de pyrazolone, hydroxypyridone, barbiturate, thiobarbiturate, dimédone ou indane-1,3-dione.

4. Matière photographique à base d'halogénure d'argent selon une des revendications 1 à 3, caractérisée par le fait que dans le colorant de formule (1), n est 1 ou 2, et aussi bien L que L' représentent $-C=$.

5. Matière photographique à base d'halogénure d'argent selon la revendication 1, caractérisée par le fait que le colorant insoluble dans l'eau correspond à la formule

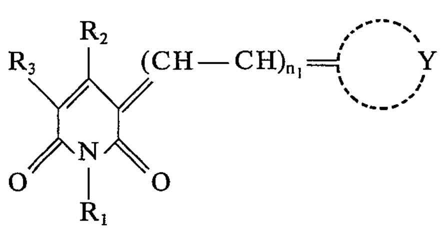

(2)

où n est 1 ou 2, et Y a la signification indiquée dans la revendication 1; $R_1$ représente un atome d'hydrogène ou un reste alcoyle, aralcoyle, cycloalcoyle, aryle ou hétérocyclique, éventuellement substitué, ou un groupe amino éventuellement substitué; $R_2$ représente un atome d'hydrogène ou un groupe hydroxyle, amino, $-CN$, $-COOR^1$, $-CONR^1R^2$ ou $-COR^1$ ou bien un reste alcoyle, aralcoyle, cycloalcoyle, aryle ou hétérocyclique, éventuellement substitué, et $R_3$ représente un atome

d'hydrogène ou un groupe $-CN$, $-COOR^3$, $-CONR^3R^4$, $-SO_3H$, $-SO_3^{\ominus}$ ou $-COR^3$, où $R^1$, $R^2$, $R^3$ et $R^4$ représentent; indépendamment les uns des autres, chacun un atome d'hydrogène ou un reste alcoyle, aralcoyle, cycloalcoyle, aryle ou hétérocyclique, éventuellement substitué, et où au moins un des noyaux d'hydroxypyridone ou Y est substitué par un groupe $-COOH$ ou un reste contenant un groupe $-COOH$.

6. Matière photographique à base d'halogénure d'argent selon la revendication 1, caractérisée par le fait que le colorant insoluble dans l'eau correspond à la formule

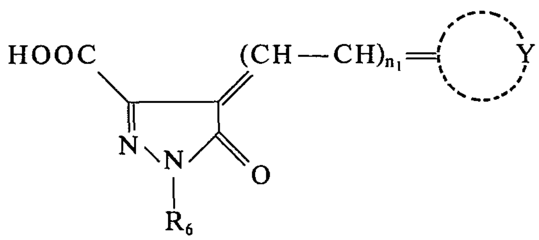

(3)

où $n_1$ est 1 ou 2, et Y a la signification indiquée dans la revendication 1, et $R_6$ représente un atome d'hydrogène ou un reste alcoyle ou aryle, éventuellement substitué.

7. Matière photographique à base d'halogénure selon les revendications 5 ou 6, caractérisée par le fait que dans les colorants de formule (2) et (3), n est 1, et Y est un système cyclique de formule

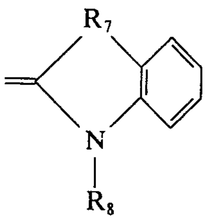

où $R_7$ représente soit $-O-$, $-S-$, $-Se-$ ou $CR_9R_{10}$, $R_9$ et $R_{10}$ étant chacun de l'hydrogène ou des groupes alcoyle inférieur, soit $-NR_{11}$, $R_{11}$ étant de l'hydrogène ou un groupe alcoyle inférieur, et $R_8$ représente un atome d'hydrogène, un groupe alcoyle inférieur ou un groupe $-COOH$.

8. Matière photographique à base d'halogénure d'argent selon la revendications 7, caractérisée par le fait que dans les colorants de formules (2) et (3), $R_7$ est $-O-$, $-CR_9R_{10}$ ou $-NR_{11}$, $R_{11}$, $R_8$ ainsi que $R_9$ et $R_{10}$ représentant tous suivant le cas de l'hydrogène, le reste méthyle ou le reste éthyle.

9. Matière photographique à base d'halogénure d'argent selon l'une des revendications 1 à 8, caractérisée par le fait que la gélatine est présente comme liant.

10. Matière photographique à base d'halogénure d'argent selon l'une des revendications 1 à 9, caractérisée par le fait que la couche, qui contient la dispersion solide du colorant, est une sous-couche anti-halo.

FIG.1

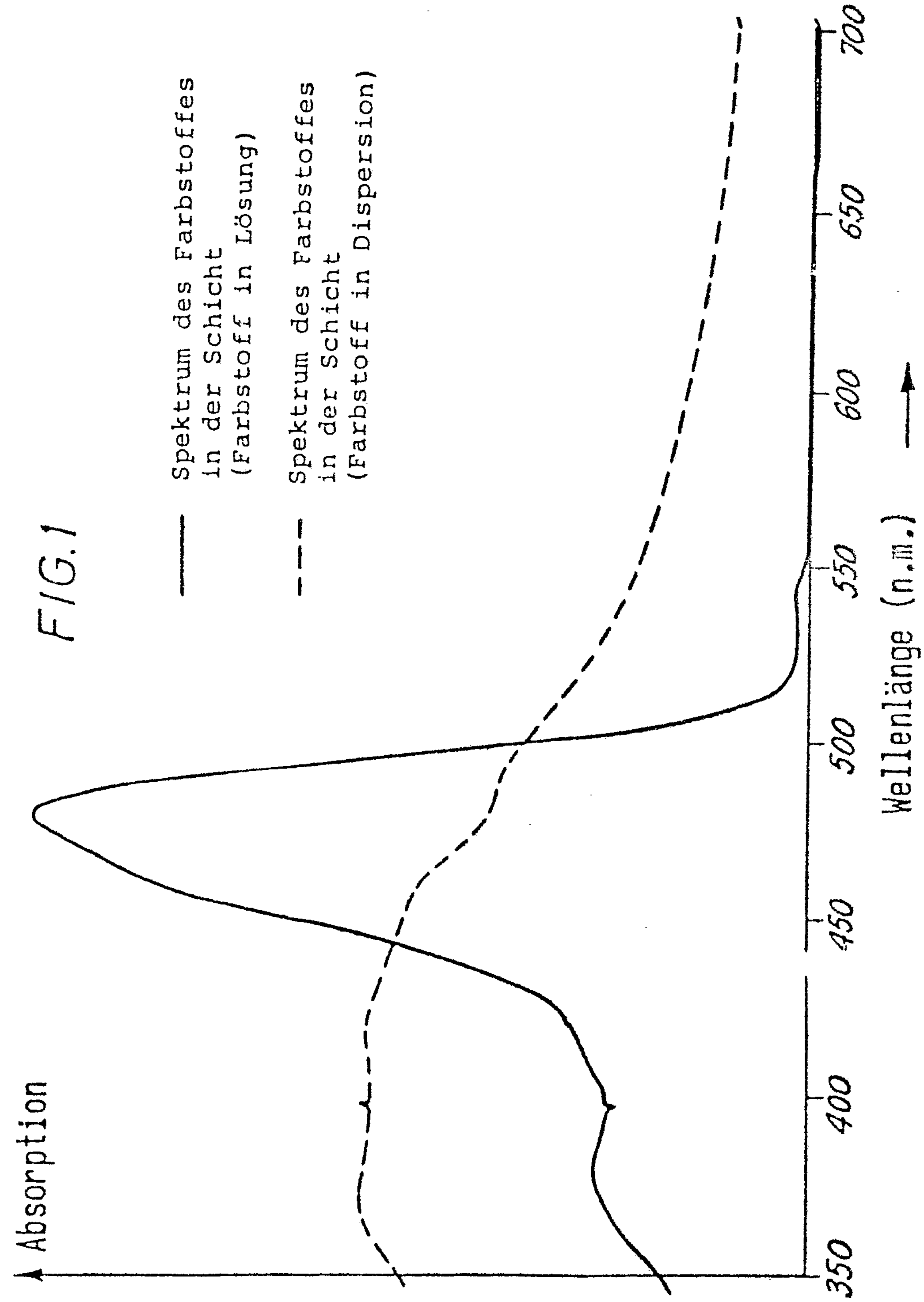
Absorption
Spektrum des Farbstoffes in der Schicht (Farbstoff in Lösung)
Spektrum des Farbstoffes in der Schicht (Farbstoff in Dispersion)
350
400
450
500
550
600
650
700
Wellenlänge (n.m.)